(19) Europäisches Patentamt
European Patent Office
Office européen des brevets

(11) Veröffentlichungsnummer: **0 412 498 A2**

# (12) EUROPÄISCHE PATENTANMELDUNG

(21) Anmeldenummer: **90115141.5**

(51) Int. Cl.[5]: **C08G 65/40**

(22) Anmeldetag: **07.08.90**

(30) Priorität: **09.08.89 DE 3926263**

(43) Veröffentlichungstag der Anmeldung:
**13.02.91 Patentblatt 91/07**

(84) Benannte Vertragsstaaten:
**AT BE CH DE DK ES FR GB GR IT LI LU NL SE**

(71) Anmelder: **HOECHST AKTIENGESELLSCHAFT**
**Postfach 80 03 20**
**D-6230 Frankfurt am Main 80(DE)**

(72) Erfinder: **Schneller, Arnold, Dr.**
**Asternweg 41**
**D-6500 Mainz(DE)**

## (54) Verfahren zur Herstellung eines aromatischen Polyethers.

(57) Bei einem Verfahren zur Herstellung eines aromatischen Polyethers durch Kondensation von zweiwertigen Phenolen mit aktivierten aromatischen Dihalogenverbindungen oder durch Selbstkondensation von mehrkernigen aktivierten Halogenphenolen wird als Kondensationshilfsmittel ein Gemisch aus Natriumcarbonat und Natriumhydrogencarbonat einsetzt.

Dadurch wird die relative Reaktionsträgheit des Natriumcarbonats aufgehoben und die Reaktionsgeschwindigkeit erheblich gesteigert.

EP 0 412 498 A2

Xerox Copy Centre

# VERFAHREN ZUR HERSTELLUNG EINES AROMATISCHEN POLYETHERS

Die Erfindung bezieht sich auf ein Verfahren zur Herstellung eines aromatischen Polyethers, der die Gruppen $-SO_2-$ und/oder -CO- enthält. Diese Polyether werden nachstehend als aromatische Polyetherketone oder als aromatische Polyethersulfone bezeichnet, je nachdem, ob die Keto- oder die Sulfonylgruppen überwiegen.

Aromatische Polyether sind als wertvolle Polymerklassen mit hohem Eigenschaftsniveau bekannt. Sie zeichnen sich durch hohe thermische Resistenz und sehr gute chemische Beständigkeit aus.

Aromatische Polyether lassen sich durch eine elektrophile Polykondensationsreaktion (Friedel-Crafts-Reaktion) von mehrkernigen aromatischen Säurehalogeniden (wobei mindestens ein Arylrest elektronenliefernde Substituenten tragen muß) herstellen, beispielsweise eines Phenoxyarylsäurechlorids, oder durch Kondensation eines Dicarbonssäurehalogenids mit einem elektronenreichen Aromaten, beispielsweise einem Diarylether (US-A 3 065 205).

Eine andere Synthesemöglichkeit ist die nukleophile Polykondensation von Halogenphenolen, wobei die Halogengruppe durch ortho- oder paraständige elektronegative Substituenten aktiviert ist, oder von zweiwertigen, ein- oder mehrkernigen Phenolen mit aktivierten Dihalogenaromaten. Bei der nukleophilen Polykondensation ist das aus dem Phenol durch Einwirken von Alkalien gebildete Phenolation das eigentliche Agens (DE-C 1 545 106 und CA-A 847 963).

Die Bildung der Phenolat-Ionen erfolgt entweder durch Umsetzung des Phenols mit z.B. Alkalihydroxiden und anschließendes Entfernen des Reaktionswassers durch azeotrope Destillation (DE-C 1 545 106) oder aber durch Zufügen von Alkalicarbonaten oder -bicarbonaten zu der Kondensationsmischung (CA-A 847 963).

Als Alkalicarbonate werden hauptsächlich Kaliumcarbonat, Mischungen aus Natrium- und Kaliumcarbonat (DE-C 28 03 873) sowie Mischungen aus Calciumcarbonat, Natriumcarbonat und Kaliumcarbonat eingesetzt (DE-A 3 342 433).

Andere Druckschriften nennen als Zusätze Alkalimetallacetate (EP-A 0 244 167) und Alkalimetallhalogenide (EP-A 0 195 448).

Mit Kaliumcarbonat oder Kaliumbicarbonat verläuft die Phenolatbildung sehr schnell und es lassen sich hochmolekulare Polyether erhalten. Als nachteilig wird bei diesem Verfahren die Bildung von Gelteilchen angesehen, wodurch eine Anwendung des Materials als Folie ausgeschlossen ist. Außerdem wird bei der Herstellung des Polyethers im Reaktor ein Material erhalten, das durch schwarze Partikel verunreinigt ist.

Es ist auch beschrieben worden, daß die alleinige Verwendung von Natriumcarbonat oder Natriumbicarbonat zu Polyethern mit lediglich niedrigem Molekulargewicht, schlechter Farbe und ungenügenden mechanischen Eigenschaften führt (US-A 4 320 224).

Zur Verkürzung der Reaktionszeiten wurde auch schon ein Gemisch aus Alkalimetallcarbonaten mit verschiedenen Alkalimetallen als Kondensationshilfsmittel vorgeschlagen (DE-A 2 803 873). Dabei wird zwar durch eine Kombination aus (viel) Natrium- mit (wenig) Kaliumcarbonat die Reaktionszeit im Vergleich zur alleinigen Verwendung von Natriumcarbonat erheblich verkürzt, allerdings sind die ursächlich mit dem Kaliumcarbonat zusammenhängenden Probleme wie Gelbildung und Bildung von schwarzen Partikeln nur vermindert, aber nicht ausgeschaltet.

In einer anderen Veröffentlichung werden Gemische aus Natriumcarbonat und/oder Bicarbonat mit Kaliumfluorid und höheren Metallhalogeniden als Kondensationshilfsmittel vorgeschlagen (EP-A 0 195 448). In der Beschreibung und in den Beispielen wird jedoch ausschließlich Natriumcarbonat und/oder Kaliumcarbonat mit Metallhalogeniden erwähnt bzw. verwendet. Auf einen Einfluß des Bicarbonats wird weder in der Beschreibung noch in den Beispielen eingegangen. Bei der zusätzlichen Verwendung von Kaliumfluorid neben Carbonaten zur Polykondensation, die ein höheres Molekulargewicht in kürzerer Reaktionszeit bewirken soll, hat man aufgrund der ausgeprägten Korrosivität von Kaliumfluorid Vorkehrungen hinsichtlich dem Material der Reaktionsgefäße zu treffen.

Aufgabe der Erfindung ist es daher, ein Verfahren bereitzustellen, das die Herstellung von aromatischen Polyethern in vergleichsweise kurzen Reaktionszeiten unter Verwendung von billigen und nicht-korrosiven Kondensationshilfmitteln erlaubt und Produkte mit besserer Qualität liefert.

Die Erfindung betrifft ein Verfahren zur Herstellung eines aromatischen Polyethers durch Kondensation von zweiwertigen Phenolen mit aktivierten aromatischen Dihalogenverbindungen oder durch Selbstkondensation von mehrkernigen aktivierten Halogenphenolen in Gegenwart von Metallcarbonaten der ersten Gruppe des periodischen Systems als Kondensationshilfsmittel, gegebenenfalls in Gegenwart mindestens eines Lösungsmittels, bei dem man als Kondensationshilfsmittel ein Gemisch aus Natriumcarbonat und Natriumhydrogencarbonat einsetzt.

Es ist überraschend, daß die relative Reaktionsträgheit des Natriumcarbonats bei der Polyethersynthese durch den Zusatz von kleinen Mengen an Natriumbicarbonat aufgehoben wird und sich die Reaktionsgeschwindigkeit erheblich steigern läßt und damit hohe Molekulargewichte innerhalb kurzer Zeit erhältlich sind. Zusätzlich sind die so erhaltenen Produkte heller als die nach bekannten Verfahren hergestellten Polyether.

Bei dem erfindungsgemäßen Verfahren kann das Mengenverhältnis von Natriumcarbonat zu Natriumbicarbonat in weiten Grenzen schwanken. Jedoch wird Natriumcarbonat, das für sich allein praktisch nicht wirksam ist, im Regelfall im Überschuß verwendet und mit einer Menge von Natriumbicarbonat kombiniert, die für sich allein im allgemeinen ebenfalls nicht ausreichend wäre. Als Kondensationshilfsmittel setzt man die Mischung aus Natriumcarbonat und Natriumbicarbonat im allgemeinen in solchen Mengen ein, daß 0,001 Mol bis 0,5 Mol, vorzugsweise bis 0,3 Mol des Natriumbicarbonates pro Mol Natriumcarbonat vorhanden sind.

Da die Kondensationsreaktionen, wie üblich, unter weitgehend wasserfreien Bedingungen durchgeführt werden, sollen auch die eingesetzten Carbonate vorzugsweise weitgehend wasserfrei sein.

Die erfindungsgemäß erzielten Vorteile sind von der Teilchengröße der eingesetzten Carbonatverbindungen nicht abhängig.

Es ist sogar möglich, mit einem Gemisch aus grobkörniger Soda (Korngröße zwischen 200 - 800 µm) und Natriumbicarbonat in kurzer Zeit die Polykondensation der eingesetzten Reaktionskomponenten zu hochmolekularen Produkten durchzuführen.

Die Verwendung von grobkörniger Soda verhindert ein unerwünschtes Stauben beim Befüllen des Reaktionsgefäßes.

Die Gesamtmenge an Carbonat ist im allgemeinen so bemessen, daß pro Mol Hydroxylgruppen der zur Reaktion kommenden phenolischen Komponente mindestens ein Mol Metallatome vorhanden sind. In manchen Fällen kann sich ein Überschuß an Carbonat von bis zu 30 % empfehlen, so daß die Gesamtmenge an Carbonat erfindungsgemäß in den meisten Fällen 1 bis 1,3 Mol Metallatome pro Mol Hydroxylgruppen beträgt.

Unter dem Begriff "aromatische Polyether" werden Polymere verstanden, die neben dem Sauerstoffatom der Etherbindung auch andere Atome und/oder Gruppen in der Hauptkette enthalten können, wie Schwefelatome und/oder Carbonyl-, Imino-, Sulfonyl-, Sulfoxidgruppen und Alkylidengruppen mit 1 bis 3 C-Atomen im Rest, sowie halogenierte Alkylidenreste.

Die nach dem erfindungsgemäßen Verfahren erhaltenen Polyether sind hochmolekulare Verbindungen, deren inhärente Viskositäten (gemessen in einer Lösung von 0,5 g des Polymeren in 100 ml konzentrierter Schwefelsäure) im allgemeinen bei 50 bis 500, vorzugsweise 75 bis 300 ml/g liegen.

Die Herstellung der Polyether erfolgt erfindungsgemäß unter im allgemeinen üblichen Bedingungen und unter Umsatz der bekannten Reaktionspartner (Monomeren), also beispielsweise von zweiwertigen Phenolen mit aktivierten aromatischen Dihalogenverbindungen oder von mehrkernigen aktivierten Halogenphenolen, in denen das Halogen an einem anderen aromatischen Kern als die Hydroxylgruppe steht, oder von derartigen Halogenphenolen mit einander äquivalenten Mengen von zweiwertigen Phenolen und aktivierten aromatischen Dihalogenverbindungen.

Im erstgenannten Fall, also bei Umsatz von zweiwertigen Phenolen mit aktivierten aromatischen Dihalogenverbindungen, beträgt das Molverhältnis der beiden Reaktanden normalerweise 0,9 bis 1,1 zu 1,0. Vorzugsweise setzt man die Verbindungen im Molverhältnis von 1:1 oder mit einem geringen Überschuß der Dihalogenverbindung ein.

Als zweiwertige Phenole kommen Verbindungen der Formel (1)

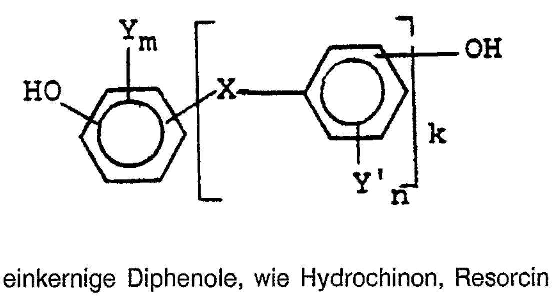

(1)

in Betracht, z.B. einkernige Diphenole, wie Hydrochinon, Resorcin oder deren Homologe wie Methylhydrochinon, Phenylhydrochinon.

Andere geeignete Diphenole sind solche, bei denen zwei Phenolreste durch eine direkte Bindung oder durch Atome bzw. Gruppen wie Sauerstoff, Schwefel, Carbonyl-, Sulfonyl-, Sulfoxid-, Alkylidengruppen mit 1-3 C-Atomen im Rest sowie halogenierte Alkylidenreste, Phenylen-, Oxyphenylenoxy-,

Carbonylphenylencarbonyl- verknüpft sind. Diese polynuklearen Diphenole lassen sich ebenfalls durch die Formel (1) beschreiben. In dieser Formel stehen Y und Y′ für Alkylgruppen oder Alkoxygruppen mit jeweils 1 bis 8, vorzugsweise 1 bis 4 C-Atomen, Aryl- oder Aryloxygruppen (Aryl, vorzugsweise Phenyl oder Naphthyl) oder Halogenatome, m und n sind unabhängig voneinander Null, eins, zwei, drei oder vier (bei Ar = Phenylen) oder mehr (bei anderen Arylresten wie Naphthylen), vorzugsweise Null oder 1, k ist Null, 1 oder 2. X ist eine Alkyliden- oder Cycloalkylidengruppe mit 1-3 C-Atomen in der Alkylidengruppe, sowie deren perfluorierte Derivate oder steht für eine direkte Bindung, -O-, -S-, -SO-, $-SO_2-$, -CO-, $-C_6H_4-$, $-O-C_6H_4-O-$ oder $-CO-C_6H_4-CO-$. Besonders bevorzugt sind Verbindungen der Formel (1) in der X eine direkte Bindung, -O-, -S-, $-SO_2-$, -CO-, $-CH_2-$, $-C(CH_3)_2-$, $-C(CF_3)_2-$, m und n Null und k Null oder 1 ist.

**Beispiele für derartige Diphenole sind:**

2,2-Bis(4′-hydroxyphenyl)propan, 2,2-Bis(4′-hydroxy-3′,5′-dimethylphenyl)propan, Bis(4′-hydroxyphenyl)-methan, Bis(4′-hydroxyphenyl) cyclohexan, 1,1-Bis(4′-hydroxyphenyl)ethan, 2,2-Bis(4′-hydroxyphenyl)-1,1,1,3,3,3-hexafluorpropan, 2,2′-Dihydroxydiphenyl, 3,3′-Dihydroxydiphenyl, 4,4′-Dihydroxydiphenyl, 3,4′-Dihydroxydiphenyl, 4,4′-Dihydroxydiphenylether, 4,4′-Dihydroxydiphenylsulfid, 4,4′-Dihydroxydiphenylsulfoxid, 4,4′-Dihydroxydiphenylsulfon, 4,4′-Dihydroxybenzophenon, 1,4 -Bis(4′-hydroxyphenoxy)benzol, 1,3-Bis(4′-hydroxy-phenoxy)benzol, 1,4-Bis(4′-hydroxybenzoyl)benzol, 1,3-Bis(4′-hydroxybenzol-sulfonyl)benzol, 1,3-Bis(4′-hydroxybenzolsulfonyl)benzol.

Die aktivierten aromatischen Dihalogenverbindungen sind ein- oder mehrkernige Verbindungen, deren Halogenatome durch elektronegative Substituenten in o- oder p-Stellung zu ihnen aktiviert sind. Bei mehrkernigen Verbindungen befinden sich die Halogenatome vorzugsweise an verschiedenen Benzolkernen; die elektronegativen Substituenten können hier das Verbindungsglied zwischen den Benzolkernen sein. Geeignete Dihalogenverbindungen sind durch die Formel

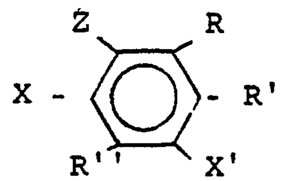

(2)

und

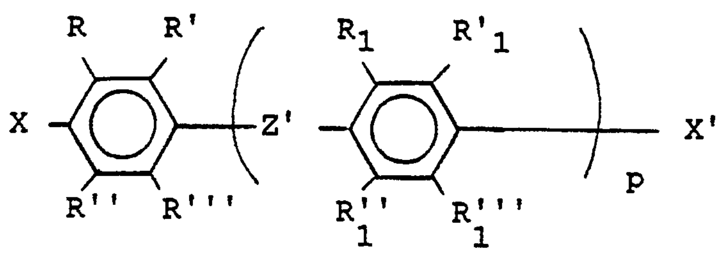

(3)

beschreiben, wobei R,R′, R″, R‴, $R_1$, $R'_1$, $R''_1$, $R'''_1$ gleich oder verschieden sind und aus der Gruppe Wasserstoff, Alkyl oder Alkoxy (jeweils zweckmäßigerweise mit 1 bis 8, vorzugsweise 1 bis 4 C-Atome), Aryl oder Aryloxy (Aryl vorzugsweise Phenyl oder Naphthyl) gewählt werden können. Weiter können R und R′, R″ sowie $R''_1$, R‴ und $R'''_1$ auch Alkylidenbrücken oder ankondensierte aromatische Ringe bedeuten. Besonders bevorzugt sind die nur durch H-Atome substituierten Verbindungen. Z und Z′ sind ein bzw. zweiwertige elektronegative Substituenten, wobei Z′ z.B. für $-SO_2-$, -CO-, -SO-, $-(R_2)-P(O)-$, $-C(=CF_2)-$, $-C[=C(CN_2)]-$ steht und Z eine einwertige elektronegative Gruppe wie $-NO_2$, -NO, $-CF_3$, -CN ist, Z′-Alkyl (Alkyl= $C_1$-$C_8$, vorzugsweise $C_1$-$C_4$) oder -Z′-Aryl (Aryl, vorzugsweise Phenyl oder Naphthyl) bedeuten kann; $R_2$ steht für Alkyl ($C_1$-$C_8$, vorzugsweise $C_1$-$C_4$) oder Aryl (vorzugsweise Phenyl oder Naphthyl). p ist eine ganze Zahl wie 1, 2 oder 3. Für p=1 kann R′ und $R_1$, zusammen genommen, auch eine direkte Bindung oder eine Alkylidenbrücke bedeuten. Aryliden steht dabei vorzugsweise für 1,2-Phenylen oder 1,2-bzw. 2,3-Naphthylen. X und X′ sind gleich oder verschieden und bedeuten Halogenatome, wobei F und Cl besonders bevorzugt sind. Beispiele geeigneter Dihalogenverbindungen sind: 2,4-Dichlornitrobenzol, 2,4-Difluornitrobenzol, 2,4-Difluorbenzophenon, 4,4′-Dichlordiphenylsulfon, 4,4′-Difluordiphenylsulfon, 4,4′-Dichlorbenzophenon, 4,4′-Difluorbenzophenon, 4,4′-Dichlordiphenylsulfoxid, 4,4′-Difluordiphenylsulfoxid, 1,4-Bis (4′-chlorbenzoyl) benzol, 1,4-Bis(4′-fluorbenzoyl)benzol, 1,3-Bis(4′-fluorbenzoyl)benzol, 1,4′-Bis(4′-chlorbenzolsulfonyl)benzol, 1,4-Bis(4′-fluorbenzolsulfonyl)benzol, 4,4′-Bis(4″-chlorbenzoyl)benzophenon, 4,4′-Bis-(4″-fluorbenzoyl)benzophenon, 2,5-Bis-(4′-fluorbenzoyl)naphthalin, 3,6-Difluorfluorenon, 3,6-Difluordibenzothiophen-S,S-dioxid, Bis-(4′-fluorphenyl)-phenylphosphinoxid, 1,1-Bis(4′-fluorphenyl)-2,2-dicyanethylen.

Vorzugsweise werden Verbindungen der Formel (4)

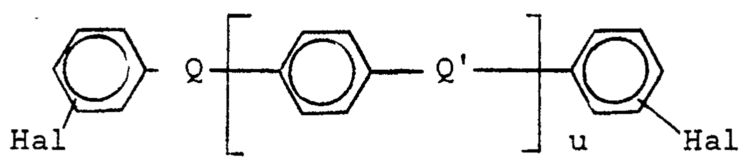

(4)

eingesetzt, worin Hal gleiche oder verschiedene Halogenatome, vorzugsweise F oder Cl, in p- oder o-Stellung sind, Q und Q′ -CO- und/oder -$SO_2$-Gruppen sind und u gleich Null, 1 oder 2 ist.

Erfindungsgemäß verwendbare Halogenphenole sind zwei- oder mehrkernige Phenole, wobei das Halogenatom nicht an dem durch die Hydroxygruppe substituierten Benzolkern steht und durch eine elektronenanziehende Gruppe in ortho- oder para-Stellung aktiviert ist. Sie lassen sich durch die allgemeine Formel

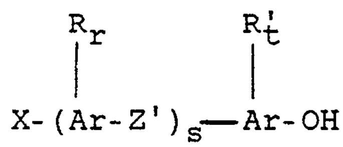

(5)

wiedergeben, wobei Ar einen Arylenrest wie Phenylen oder Naphthylen bedeutet, r, s und t ganze Zahlen wie 1, 2, 3, oder 4 sind; R und R′ können gleich oder verschieden sein und aus der Gruppe Wasserstoff, Alkyl, Alkoxy jeweils mit 1-6 C-Atomen, vorzugsweise 1-4 C-Atomen im Alkylrest, Aryl oder Aryloxy ausgewählt sein. Z′ hat die gleiche Bedeutung wie oben. Beispiele geeigneter Halogenphenole sind: 4-Fluor-4′-hydroxy-benzophenon, 4-Chlor-4′-hydroxybenzophenon, 4-Fluor-4′-hydroxy-diphenylsulfon, 4-Chlor-4′-hydroxy-diphenylsulfon, 1-(4′-Hydroxybenzoyl)-4-(4″-chlorbenzoyl)benzol, 1-(4′-Hydroxybenzoyl)-4-(4″-fluorbenzoyl)benzol.

Die erfindungsgemäße Kondensationsreaktion wird entweder in Substanz oder in Gegenwart eines inerten Lösungsmittels durchgeführt, in denen das gebildete Polymere bei der Reaktionstemperatur löslich ist. Als Lösungsmittel kommen beispielsweise in Frage: Diphenylsulfon, cyclische aromatische Sulfone wie Dibenzothiophen-S,S-dioxid oder, weniger bevorzugt, Benzophenon und cyclische aromatische Ketone, z.B. Fluorenon. Derartige Lösungsmittel sind u.a. in der DE-A 2 803 873 beschrieben. In diesem Fall ist es zweckmäßig, daß in einer Lösung einer benzoiden Dihalogenverbindung, in der die Halogenatome durch o- oder p-ständige $SO_2$- oder CO-Gruppen aktiviert sind, bei erhöhter Temperatur Natriumcarbonat und/oder Natriumbicarbonat suspendiert und anschließend die benzoide Dihydroxyverbindung bei erhöhter Temperatur zudosiert wird.

Die Reaktionstemperatur ist im unteren Bereich durch die Schmelztemperatur mindestens einer der Komponenten oder des Lösungsmittels und im oberen Bereich durch die Zersetzungstemperatur der Kondensationspartner bzw. des Lösungsmittels (falls eingesetzt) begrenzt. Sie liegt im allgemeinen zwischen 100 und 400 °C, vorzugsweise zwischen 180 und 350 °C, und hängt u.a. von der Reaktivität der Kondensationspartner und der Art des verwendeten Lösungsmittels (falls eingesetzt) ab. Vorzugsweise wird dabei so gearbeitet, daß mit einer niedrigen Reaktionstemperatur begonnen wird und die Temperatur allmählich oder stufenweise gesteigert wird, wenn die Viskosität der Reaktionsmasse steigt.

Das Kondensationsverfahren kann auf unterschiedliche Weise durchgeführt werden. Eine Möglichkeit ist das Beschicken des Reaktors mit allen Komponenten bei Raumtemperatur und anschließende Temperaturerhöhung. Nach dem Aufschmelzen der Reaktionspartner und gegebenenfalls des Lösungsmittels setzt die Reaktion bei erhöhter Temperatur ein, erkennbar u.a. an der Gasentwicklung. Man läßt dann so lange weiterreagieren, bis die gewünschte Viskosität erreicht ist.

Eine weitere, für das beschriebene Verfahren bevorzugte Möglichkeit ist die Vorlage eines Reaktionspartners zusammen mit dem Kondensationshilfsmittel bei Raumtemperatur, anschließendem Aufheizen und

die kontinuierliche Zugabe des zweiten Reaktanden bei erhöhter Temperatur, vorzugsweise bei 200 - 350 °C. Diese Vorgehensweise gewährleistet eine bessere Kontrolle der Reaktion, vor allem bei sehr aktiven Reaktionspartnern.

Will man die Kondensation in Gegenwart eines Lösungsmittels vornehmen, ist es zweckmäßig, das Kondensationsmittel in einer Lösung der Dihalogenverbindung zu suspendieren, gegebenenfalls bei erhöhten Temperaturen bis zu 190 °C und nach Temperaturerhöhung des Reaktionsansatzes auf 200 bis 350 °C die Dihydroxyverbindung zuzugeben.

Falls erforderlich, kann die Kondensationsreaktion in Gegenwart einer kettenabbrechenden Substanz (Regler) durchgeführt werden. Als solche kommen beispielsweise Methylchlorid, t-Butylchlorid, 4-Chlordiphenylsulfon und 4-Fluorbenzophenon in Frage.

Die Aufarbeitung des anfallenden Gemisches aus Polymer und Salz sowie gegebenenfalls Lösemittel erfolgt nach Standardmethoden wie Filtration und/oder Auswaschen mit Lösemitteln für die Salze, z.B. Wasser, und für das gegebenenfalls in der Reaktion eingesetzte Lösemittel.

Die erfindungsgemäß erhältlichen Polymeren eignen sich auf Grund ihrer hohen Temperaturbeständigkeit, ihrer Hydrolysebeständigkeit und ihrer anderen Eigenschaften u.a. für Überzüge von elektrischen Kabeln, für Beschichtungen für Drähte und Monofile und für Formteile in elektrischen Geräten.

In den nachfolgenden Beispielen wurde die inhärente Viskosität der erhaltenen Polymeren an einer Lösung von 0,5 g des Polymeren in 100 ml konzentrierter Schwefelsäure bestimmt. Die inhärente Viskosität ist definiert als

$$\eta_{inh} \quad \frac{\ln \eta_{rel}}{c} \quad \text{mit} \quad \eta_{rel} \quad \frac{t}{t_o}$$

t : Durchlaufzeit der Lösung
$t_o$: Durchlaufzeit des Lösugsmittels
c : Konzentration des Polymeren in g/mL

## Beispiele

1) Ein 250-ml-Vierhalskolben mit Argonspülung, Rührer, Luftkühler und Thermometer wurde mit 100 g Diphenylsulfon und 32,2 g (0,1 mol) 1,4-Bis-(4′-fluorbenzoyl)-benzol beschickt und auf 270 °C geheizt. Ein Gemisch von 115 mol.-% (12,1 g) wasserfreiem Natriumcarbonat (Korngröße 200-800 µm) und 10 mol.-% (0,84 g) Natriumbicarbonat (Korngröße 100 µm) wurden zugegeben und während des Hochheizens auf 310 °C wurde eine 250 °C heiße, 50 Gew.-%ige Lösung aus Diphenylsulfon und Hydrochinon (11,0 g) zugetropft. Nach einer Reaktionszeit von 25 Minuten wurden 0,6448 mol 1,4-Bis-(4′-fluorbenzoyl)-benzol zugegeben, um die Reaktion zu beenden. Das Reaktionsgemisch wurde abgekühlt und zerkleinert, die Salze uhd das Diphenylsulfon wurden extrahiert, wobei Aceton und Wasser im Wechsel eingesetzt wurden. Die inhärente Viskosität (I.V.) beträgt 110,37 ml/g, gemessen in einer Lösung von 0,5 g Polymeren in 100 ml konzentrierter Schwefelsäure.

2) Vergleich 1

Beispiel 1 wurde wiederholt, wobei anstelle des Gemisches (Natriumcarbonat/Natriumbicarbonat), 120 mol.-% (12,6 g) Natriumcarbonat (Korngröße 200-800 µm) eingesetzt wurde. Nach einer Reaktionszeit von 4 Stunden war kein Anstieg der Viskosität zu verzeichnen. Die inhärente Viskosität des nach Aufarbeitung verbliebenen Rückstandes betrug 7,11 ml/g. Ein Dünnschichtchromatogramm ließ noch Monomere erkennen.

3) Beispiel 1 wurde wiederholt, jedoch wurde ein Gemisch aus 115 mol.-% (12,1 g) Natriumcarbonat (Korngröße.80 µm) und 10 mol.-% (0,84 g) Natriumbicarbonat (Korngröße 100 µm) eingesetzt. Nach einer Reaktionszeit von 20 Minuten erhielt man eine inhärente Viskosität von 116,34 ml/g.

4-8) Beispiel 1 wurde wiederholt, jedoch wurden verschiedene Mengen von Natriumbicarbonat und Natriumcarbonat eingesetzt (siehe Tabelle I).

Tabelle I:

| Beispiel | $Na_2CO_3$ mol.-% (80 µm) | $NaHCO_3$ mol.-% (100 µm) | Reaktionsdauer (min.) | I.V. (ml/g) |
|---|---|---|---|---|
| 4 | 119 | 2 | 45 | 115,71 |
| 5 | 118 | 4 | 40 | 109,15 |
| 6 | 117 | 6 | 25 | 115,63 |
| 7 | 115 | 10 | 20 | 116,34 |
| 8 | 110 | 20 | 10 | 111,21 |
| Vgl. 2 | 120 | - | 180 | 70,37 |

9) Vergleich 2 (V2 in Tabelle I)
Nach der Verfahrensweise des Beispiels 1 wurden 120 mol.-% (12,6 g) Natriumcarbonat (Korngröße 80 µm) eingesetzt, dabei erhielt man nach einer Reaktionsdauer von 120 Minuten ein Polymeres mit einer inhärenten Viskosität von 70,37 ml/g.

Wie die Beispiele 4-8 zeigen, führt der Zusatz von bereits geringen Mengen Natriumbicarbonat zu einer starken Beschleunigung der Reaktion. Während mit Natriumcarbonat der Korngröße 80 µm das Polymere erst nach 3 Stunden eine Lösungsviskosität von 70 ml/g aufweist (Vergleichsbeispiel 2), werden mit Zusätzen von Natriumbicarbonat in erheblich kürzeren Zeiten Lösungsviskositäten von über 100 ml/g erreicht.

10) Um den zeitlichen Verlauf der Viskosität und damit der Polykondensationsreaktion zu verfolgen, wurden aus einem Ansatz analog Beispiel 1 mit 119 mol-% Natriumcarbonat und 2 mol.-% Natriumbicarbonat im Abstand von 15 Minuten Proben entnommen, analog Beispiel 1 aufgearbeitet und die Lösungsviskosität des entstandenen Polymeren gemessen. Werte siehe Tabelle II.

Tabelle II:

| | | Inhärente Viskosität (ml/g) | | | | | | |
|---|---|---|---|---|---|---|---|---|
| Beispiel | | E* | 15 min. | 30 min. | 45 min. | 60 min. | 75 min. | 90 min. |
| 10 | 119 mol-% Soda<br>2 mol-% Bicarbonat | 35,67 | 55,97 | 75,53 | 115,32 | - | - | - |
| 11 | 120 mol-% Soda | 24,48 | 38,17 | 43,59 | 49,32 | 57,47 | 60,73 | 65,13 |
| (V3) | 200 mol-% Soda | 27,78 | 42,86 | 46,22 | 55,72 | 61,37 | 64,22 | 72,99 |

E* = IV zum Zeitpunkt der Beendigung der Hydrochinon-Zugabe

11. Vergleich 3
Es wurde gearbeitet wie in Beispiel 10, jedoch betrug die eingesetzte Menge an Natriumcarbonat 120 bzw. 200 mol.-%. Werte siehe Tabelle II.

Wie aus dieser Tabelle ersichtlich ist, führt bereits der Zusatz von kleinen Mengen an Natriumbicarbonat zu einer starken Beschleunigung der Reaktion und einem steilen Viskositätsanstieg. Dagegen ist bei dem alleinigen Einsatz von Natriumcarbonat in Mengen von 200 mol-% (100 % Überschuß) dieser schnelle Molekulargewichtsaufbau nicht zu erreichen. Nach fast doppelter Reaktionsdauer liegen die Viskositätswerte des Vergleichs deutlich niedriger als für das nach den erfindungsgemäßen Verfahren hergestellte Polymer.

## Ansprüche

1. Verfahren zur Herstellung eines aromatischen Polyethers durch Kondensation von zweiwertigen Phenolen mit aktivierten aromatischen Dihalogenverbindungen oder durch Selbstkondensation von mehrkernigen

aktivierten Halogenphenolen in Gegenwart von Metallcarbonaten der ersten Gruppe des periodischen Systems als Kondensationshilfsmittel, gegebenenfalls in Gegenwart mindestens eines Lösungsmittels, dadurch gekennzeichnet, daß man als Kondensationshilfsmittel ein Gemisch aus Natriumcarbonat und Natriumhydrogencarbonat einsetzt.

2. Verfahren nach Anspruch 1 dadurch gekennzeichnet, daß die Menge an Natriumbicarbonat 0,001 bis 0,5 Mol vorzugsweise bis 0,3 Mol pro Mol eingesetztem Natriumcarbonat beträgt.

3. Verfahren nach Anspruch 1 oder 2, dadurch gekennzeichnet, daß die Carbonate in solchen Mengen eingesetzt werden, daß pro Mol Hydroxylgruppen der zur Reaktion kommenden phenolischen Komponente mindestens ein Mol Metallatome vorhanden sind.

4. Verfahren nach einem oder mehreren der Ansprüche 1 bis 3, dadurch gekennzeichnet, daß die Kondensationsreaktion in einem aromatischen Sulfon, bevorzugt in Diphenylsulfon ausgeführt wird.

5. Verfahren nach einem oder mehreren der Ansprüche 1 bis 4, dadurch gekennzeichnet, daß eine benzoide Dihalogenverbindung der Formel

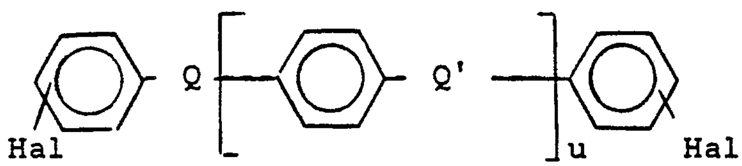

(4)

eingesetzt wird, worin Hal gleich oder verschiedene Halogenatome in p- oder o-Stellung sind, Q und Q′ -CO-und/oder $-SO_2$-Gruppen sind und u gleich Null, 1 oder 2 ist.

6. Verfahren nach einem oder mehreren Ansprüche 1 bis 5, dadurch gekennzeichnet, daß die benzoide Dihydroxyverbindung ein Phenol der Formel

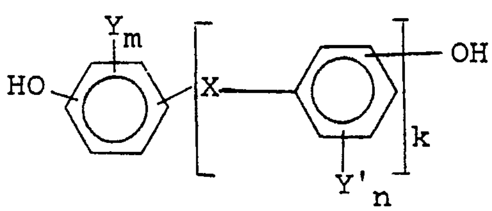

(1)

ist, in der X eine direkte Bindung, -O-, -S-, $-SO_2-$, -CO-, $-CH_2-$, $-C(CH_3)_2-$, $-C(CF_3)_2-$, m und n Null und k Null oder 1 ist.

7. Verfahren nach einem oder mehreren der Ansprüche 1 bis 6, dadurch gekennzeichnet, daß in der, in einem Lösungsmittel gelösten, Dihalogenverbindung eine Mischung aus Natriumcarbonat und Natriumhydrogencarbonat bei erhöhter Temperatur suspendiert wird und anschließend die Dihydroxyverbindung bei erhöhter Temperatur, vorzugsweise 200 - 350 °C, zugegeben wird.

8. Verfahren nach einem oder mehreren der Ansprüche 1 bis 7, dadurch gekennzeichnet, daß die Kondensation so lange durchgeführt wird, bis die inhärente Viskosität 50 bis 500, vorzugsweise 75 bis 300 ml/g (gemessen in einer Lösung von 0,5 g des Polymeren in 100 ml konzentrierter Schwefelsäure) beträgt.

9. Verfahren nach einem oder mehreren der Ansprüche 1 bis 8, dadurch gekennzeichnet, daß als zweiwertiges Phenol Hydrochinon oder 2,2-Bis(4′-hydroxyphenyl)propan und als Dihalogenverbindung 1,4-Bis(4′-Chlorbenzoyl)benzol oder 1,4-Bis(4′-Fluorbenzoyl) benzol in Gegenwart von Diphenylsulfon eingesetzt werden.

10. Verfahren nach einem oder mehreren der Ansprüche 1 bis 9, dadurch gekennzeichnet, daß die Reaktion in Gegenwart von Reglern, vorzugsweise Methylchlorid, t-Butylchlorid, 4-Chlordiphenylsulfon und 4-Fluorbenzophenon, durchgeführt wird.